## Europäisches Patentamt
## European Patent Office
## Office européen des brevets

(11) Publication number: **0 293 217 A2**

# (12) EUROPEAN PATENT APPLICATION

(21) Application number: **88304818.3**

(22) Date of filing: **27.05.88**

(51) Int. Cl.⁴: **H 04 N 9/64**

(30) Priority: **27.05.87 JP 128017/87**

(43) Date of publication of application:
**30.11.88 Bulletin 88/48**

(84) Designated Contracting States: **DE FR GB**

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Takeuchi, Motohiko c/o Patent Division**
**Toshiba Corp.Princ.Off.1-1, Shibaura 1-chome**
**Minatao-ku Tokyo (JP)**

(74) Representative: **Muir, Ian R. et al**
**HASELTINE LAKE & CO. Hazlitt House 28 Southampton**
**Buildings Chancery Lane**
**London WC2A 1AT (GB)**

(54) **Memory system for a television video signal.**

(57) A memory system for processing a composite analog video signal, the composite analog video signal including a luminance signal and two color difference signals. The memory system includes a color separation circuit (12) for separating the composite analog video signal received from a source (10) thereof into the luminance signal and two distinct color difference signals, analog-to-digital converters (14, 16, 18) for separately converting each of the luminance signal and two distinct color difference signals into corresponding digital signals, a memory circuit for temporarily storing the digital luminance signal and two distinct digital color difference signals for a prescribed time and digital-to-analog converters (32, 36, 38) for converting the delayed digital luminance signal and the digital color difference signals into corresponding analog signals, characterized in that the memory system further includes a multiplexer (24) coupled to the analog-to-digital converters (14, 16, 18) for combining the three separate digital signals from the analog-to-digital converters (14, 16, 18) into a single digital multiplex signal and a demultiplexer (30) for separating the stored digital multiplex signal from the memory circuit into separate delayed digital luminance signal and two digital color difference signals, and wherein the memory circuit includes a singular memory (28) coupled between the multiplexer (24) and the demultiplexer (30) for temporarily storing the digital multiplex signal for a prescribed time.

## Description

## MEMORY SYSTEM FOR A TELEVISION VIDEO SIGNAL

The present invention relates generally to memory system for a television video signal, and more particularly, to memory system for a digital television video signal.

Along with the remarkable developments of digital IC (integrated circuit) techniques in recent years, signal processing which was conventionally subjected to analog processing, can be digitally performed in a color video apparatus such as a color television receiver.

A digital video signal processing system is capable of high-precision and nondistorted processing. Stable operation with regard to changes in temperatures, deterioration over time and noise can also be achieved. The digital signal processing system is accompanied with a memory or a microcomputer for easily performing multi-screen image processing, scanning rate conversion, still image processing and other special effects. The digital signal processing circuit can also be coupled to various different media signals.

The digital video signal processing system processes signals in the form of a digital configuration. On the other hand, analog signals are input or output to or from the digital video signal processing system. Therefore, the digital video signal processing system includes an analog-to-digital converter (referred as A/D converter hereinafter) and a digital-to-analog converter (referred as D/A converter hereinafter) at an input stage and an output stage thereof, respectively. In the A/D converter, an analog signal is sampled at an adequate frequency.

There are two typical sampling systems, as described below, for digital video signal processing systems. In the first system, analog composite video signals are directly sampled, as they are. The sampling for the analog composite signals is carried out at a frequency of three to four times the frequency of the color subcarrier signal.

In the second system, three color signal components, i.e., a luminance signal Y and two color difference signals R-Y and B-Y of a color video signal are separated from the analog composite video signal. Hereupon, the luminance signal Y and the color difference signals R-Y and B-Y are transmitted in place of three color signals R, G and B in the NTSC television system, as is well known. Television receivers then reproduce the three color signals R, G and B from the luminance signal Y and the color difference signals R-Y and B-Y. The color difference signals R-Y and B-Y represent difference signals between the red signal R and the luminance signal Y and the blue signal B and the luminance signal Y, respectively.

These three analog signals Y, R-Y and B-Y are separately sampled for the digital processing. In the second system, the samplings are separately carried out at frequencies adequate for the three analog signals Y, R-Y and B-Y, respectively.

In the NTSC television system, the luminance signal Y has a relatively wide frequency band of 4.2 MHz maximum. Each of the color difference signals R-Y and B-Y normally has a relatively narrow frequency band of 0.5 MHz.

In conventional systems the color difference signals R-Y and B-Y having such a relatively narrow frequency band, i.e., 0.6 MHz, can be processed together by a common digital processing circuit by multiplexing them at a prescribed frequency. However, the luminance signal Y having such a relatively wide frequency band, i.e., about 4.2 MHz, has been processed alone, apart from the color difference signals R-Y and B-Y. Therefore, the second sampling system conventionally has needed to have at least two memories, one for the luminance signal Y and one for the color difference signals R-Y and B-Y.

For example, a noise reduction system for the video signal, which employs a correlation between the time bases of two video signals, has been provided with at least two memories, i.e., a memory for storing the luminance signal Y and another memory for storing the color difference signals R-Y and B-Y. As a result, the conventional digital processing circuit for the noise reduction system of video signals is complicated and relatively high in cost.

The present invention seeks to provide a memory system for a digital television video signal, which is able to store both the luminance signal Y and the color difference signals R-Y and B-Y in a common memory.

A memory system for a digital television video signal according to one aspect of the present invention, in which the memory system processes a composite analog video signal, the composite analog video signal including a luminance signal and two color difference signal, includes a separator for separating the composite analog video signal received from a source thereof into the luminance signal and two distinct color difference signals, an analog-to-digital converter for separately converting each of the luminance signal and two distinct color difference signals into corresponding digital signals, a multiplexer coupled to the analog-to-digital converter for combining the three separate digital signals from the analog-to-digital converter into a single digital multiplex signal, a memory coupled to the multiplexer for temporarily storing the digital multiplex signal for a prescribed time, a demultiplexer for separating the stored digital multiplex signal from the memory into separate delayed digital luminance signal and two digital color difference signals, and a digital-to-analog converter for converting the delayed digital luminance signal and the digital color difference signals into corresponding analog signals.

A more complete appreciation of the invention and many of the attendant advantages thereof will be readily obtained as the same becomes better understood by reference to the following detailed description when considered in connection with the accompanying drawings, wherein; by way of example:

FIGURE 1 is a block diagram showing an embodiment of a memory system for a digital television video signal according to the present invention; and

FIGURE 2 is a timechart graph of signals for storing or reading to and from the memory of FIGURE 1.

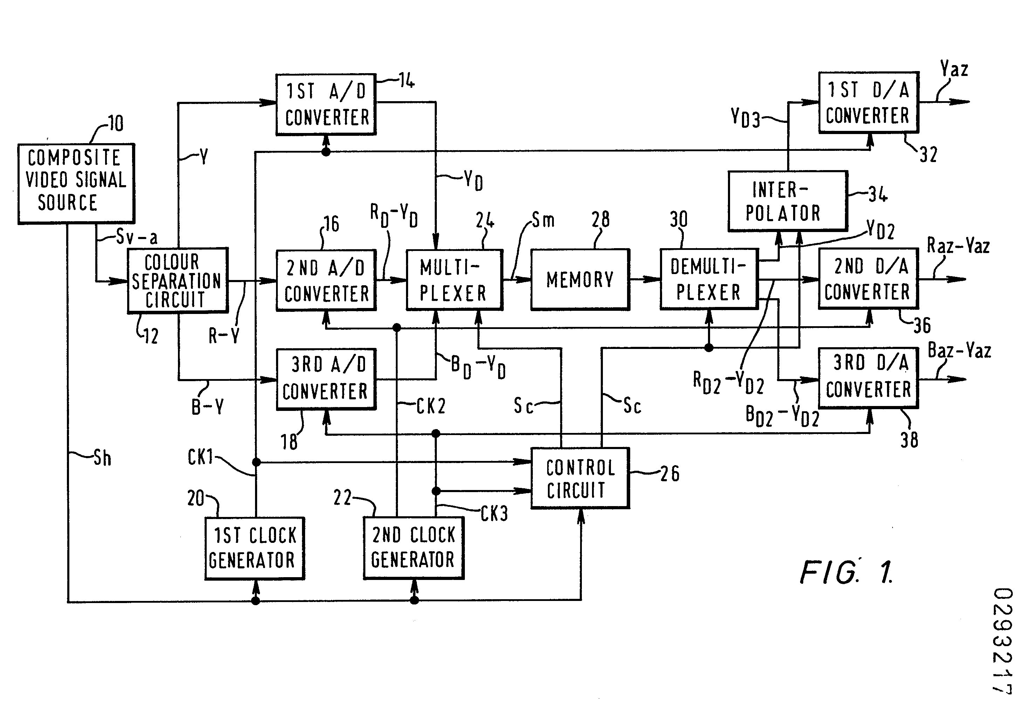

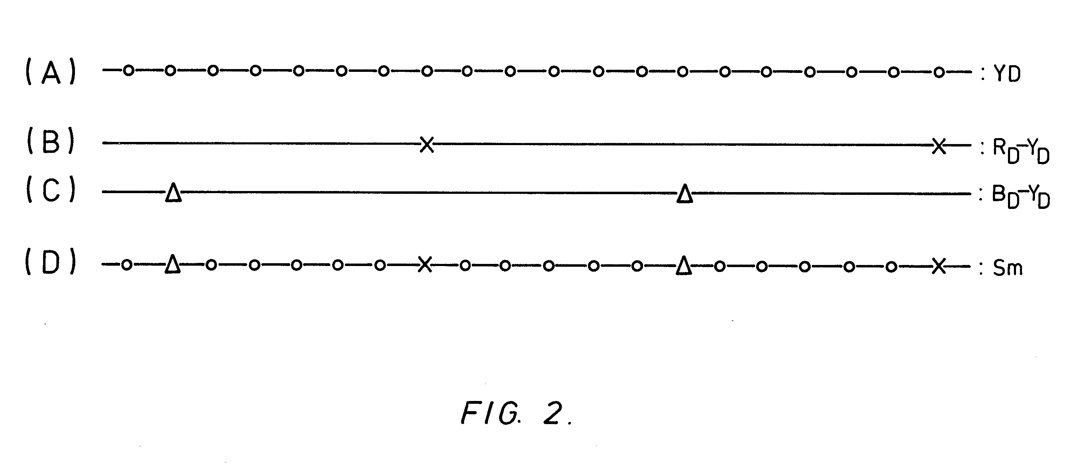

The present invention will be described in detail with reference to FIGURES 1 and 2. Referring now to FIGURE 1, an embodiment of the memory system for the digital television video signal according to the present invention will be described in detail.

FIGURE 1 is a block diagram to show an embodiment of the memory system of the present invention. In FIGURE 1, a composite video signal source 10 receives a high frequency television signal transmitted from television broadcast stations and produces an analog composite video signal Sv-a by demodulating the high frequency television signal. Instead of the television broadcast stations, the composite video signal source 10 can produce the analog composite video signal Sv-a in accordance with a corresponding signal supplied from other devices, such as a TV camera apparatus, a test signal generator, etc.

The analog composite video signal Sv-a obtained by the composite video signal source 10 is applied to a color separation circuit 12. The color separation circuit 12 separates a luminance signal Y and two color difference signals R-Y and B-Y from the analog composite video signal Sv-a. The luminance signal Y and the color difference signals R-Y and B-Y comprising the color signal are transmitted in place of three color signals R, G and B, as described before.

The luminance signal Y and the color difference signals R-Y and B-Y are separately applied to first, second and third A/D converters 14, 16 and 18. The first A/D converter 14 for the luminance signal Y is coupled to a first clock generator 20 for receiving a first sampling clock signal CK1. The second and third A/D converters 16 and 18 for the color difference signals R-Y and B-Y are coupled to a second clock signal generator 22 in common for receiving second and third sampling clock signals CK2 and CK3.

The first and second clock signal generators 20 and 22 are coupled to the composite video signal source 10 for receiving a synchronous signal, e.g., a horizontal synchronous signal Sh so that the first clock generator 20 generates the first sampling clock signal CK1 and the second clock generator 22 generates the second and third sampling clock signals CK2 and CK3 in synchronization with the horizontal synchronous signal Sh. The second and third sampling clock signals CK2 and CK3 have the same frequency, but different in phase by 180°, with each other. The first sampling clock signal CK1 has a frequency of twelve times the frequency of the second and third sampling clock signals CK2 and CK3. The second clock generator 22 may generates the second and third sampling clock signals CK2 and CK3 in synchronization with a color burst signal obtained by the composite video signal source 10, instead of the horizontal synchronous signal Sh.

The first A/D converter 14 digitizes the luminance signal Y at a sampling frequency of the first sampling clock signal CK1 so that a digital luminance signal Yd is output therefrom. The second and third A/D converters 16 and 18 digitize the color difference signals R-Y and B-Y at the frequency of the second sampling clock signal CK2, so that digital color difference signals Rd-Yd and Bd-Yd are output therefrom, respectively.

The digital luminance signal Yd and the digital color difference signals Rd-Yd and Bd-Yd are applied to a multiplexer 24. The multiplexer 24 multiplexes these three digital signals in response to a control signal Sc supplied from a control circuit 26. The control circuit 26 generates the control signal Sc in response to both the first and second sampling clock signals CK1 and CK2. The control circuit 26 further is coupled to the composite video signal source 10 for receiving the horizontal synchronous signal Sh as a reset signal thereto.

Referring now to FIGURE 2, which is a timechart showing the input signals and an output signal of the multiplexer 24, an operation of the multiplexer 24 will be described. The digital luminance signal Yd is sampled at a predetermined frequency, as shown in FIGURE 2(A). Sampled data of the digital luminance signal Yd are illustrated by symbols "o" in the drawing. The digital color difference signals Rd-Yd and Bd-Yd are sampled as shown in FIGURES 2(B) and 2(C), respectively. Sampled data of the digital color difference signals Rd-Yd and Bd-Yd are are illustrated by symbols "x" and "Δ" in the drawings. The sampling frequency of the digital luminance signal Yd is twelve times the sampling frequency of the digital color difference signals Rd-Yd and Bd-Yd. The digital luminance signal Yd and the digital color difference signals Rd-Yd and Bd-Yd are applied to the multiplexer 24 with a relation as shown in FIGURE 2.

As a result, a multiplexed signal Sm, as shown in FIGURE 2(D), is output from the multiplexer 24. In the multiplexed signal Sm, the digital color difference signals Rd-Yd and Bd-Yd, i.e., the symbols "x" and "Δ", alternately occurs for every five occurrences of the digital luminance signal Yd, i.e., the symbols "o".

The multiplex signal Sm is written into a memory 28, e.g.,for delaying the multiplex signal Sm for a prescribed time. The stored multiplex signal Sm is then read out from the memory 28. The multiplex signal Sm thus read out is applied to a demultiplexer 30. The demultiplexer 30 is controlled by the control signal Sc from the control signal 26, so that the multiplex signal Sm is separated into three signals Yd2, Rd2-Yd2 and Bd2-Yd2. The signal Yd2 corresponds to the digital luminance signal Yd, but its sampled signals responding to the digital color difference signals Rd-Yd and Bd-Yd in the multiplex signal Sm are dropped out. The signals Rd2-Yd2 and Bd2-Yd2 exactly correspond to the digital color difference signals Rd-Yd and Bd-Yd.

The demultiplexed luminance signal Yd2 is thus applied to a first D/A converter 32 via a signal interpolator 34.

The demultiplexed digital color difference signals Rd2-Yd2 and Bd2-Yd2, which are almost equivalent to the former digital signals Rd-Yd and Bd-Yd obtained from the second and third A/D converters 16 and 18, are applied directly to second and third D/A converters 36 and 38, respectively.

The signal interpolator 34 interpolates the signal drop out portions of the demultiplexed luminance signal Yd2 in a conventional manner, in synchronization with the control signal Sc applied from the control circuit 26. For example, the signal interpolation is carried out by an insertion of a sampled signal prior to the signal drop out portion or an average signal between two signals sampled prior to and after the signal drop out portion, respectively. Thus, an interpolated signal Yd3 output from the signal interpolator 34 becomes almost equivalent to the digital luminance signal Yd output from the first A/D converter 14.

The first D/A converter 32 analogizes the interpolated digital luminance signal Yd3, in synchronzation with the first clock signal CK1. Thus, a delayed analog luminance signal Ya2 corresponding to the analog luminance signal Ya is output from the first D/A converter 32.

The second and third D/A converters 36 and 38 also analogize the demultiplexed digital color difference signals Rd2-Yd2 and Bd2-Yd2, in synchronization with the second and third clock signals CK2 and CK3, respectively. Thus, delayed analog color difference signals Ra2-Ya2 and Ba2-Ya2 corresponding to the analog color difference signals R-Y and B-Y are output from the second and third D/A converters 36 and 38.

According to this embodiment, as shown in **FIGURE** 1, prescribed sampled signals of the digital luminance signal Yd are taken out at a certain interval in the multiplexer 24. The interval corresponds to a frequency of two times the frequency of the sampling frequency for the color difference signals R-Y and B-Y. The digital color difference signals Rd-Yd and Bd-Yd are alternately inserted in the places where the prescribed sampled signal has been taken out. Thus, the digital luminance signal Yd and the digital color difference signals Rd-Yd and Bd-Yd are multiplexed into a single digital multiplex signal Sm. Thus, the singular memory 28 can process the signals.

As is evident, the memory system for a digital television video signal circuit according to the present invention is simplified and is less expensive in compared to the conventional system.

The video memory system of the present invention as described above, can store three kinds of signals with a single memory.

Further, the video memory system according to the present invention has fewer parts.

While there has been illustrated and described what are at present considered to be preferred embodiments of the present invention, it will be understood by those skilled in the art that various changes and modifications may be made, and equivalents may be substituted for elements thereof without departing from the true scope of the invention. In addition, many modifications may be made to adapt a particular situation or material to the teaching of the present invention without departing from the central scope thereof. Therefore it is intended that this invention not be limited to the particular embodiment disclosed as the best mode contemplated for carrying out this invention, but that the invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a dividual application.

## Claims

1. A memory system for processing a composite analog video signal, the composite analog video signal including a luminance signal and two color difference signals, comprising means (12) for separating the composite analog video signal received from a source (10) thereof into the luminance signal and two distinct color difference signals, analog-to-digital converter means (14, 16, 18) for separately converting each of the luminance signal and two distinct color difference signals into corresponding digital signals, memory means for temporarily storing the digital luminance signal and two distinct digital color difference signals for a prescribed time and digital-to-analog converter means (32, 36, 38) for converting the delayed digital luminance signal and the digital color difference signals into corresponding analog signals, characterized in that the memory system further includes multiplexer means (24) coupled to the analog-to-digital converter means (14, 16, 18) for combining the three separate digital signals from the analog-to-digital converter means (14, 16, 18) into a single digital multiplex signal and demultiplexer means (30) for separating the stored digital multiplex signal from the memory means into separate delayed digital luminance signal and two digital color difference signals, and wherein the memory means includes a singular memory (28) coupled between the multiplexer means (24) and the demultiplexer means (30) for temporarily storing the digital multiplex signal for a prescribed time.

2. The system of claim 1 also including signal interpolator means (34) for receiving the delayed digital luminance signal, interpolating the delayed digital luminance signal and supplying the interpolated delayed digital luminance signal to the digital-to-analog converter means (32, 36, 38).

3. The system of claim 2 wherein the analog-to-digital converter means includes sampling clock means (20, 22) for controlling the timing of the analog-to-digital converter means (14, 16, 18).

4. The system of claim 3 wherein the multiplexer means includes control circuit means (26) for generating a control signal in response to the sampling clock means (20, 22) and a multiplexer (24) responsive to the control signal.

FIG. 1.

0293217

FIG. 2.